# EUROPÄISCHE PATENTSCHRIFT

(11) **EP 3 619 885 B1**
(45) Veröffentlichungstag und Bekanntmachung des Hinweises auf die Patenterteilung: **15.12.2021**
(21) Anmeldenummer: 18734104.5
(22) Anmeldetag: 07.06.2018
(51) Int. Cl.: H04L 9/08, H04L 9/32

(54) **VERFAHREN ZUM BLOCKCHAIN BASIERTEN, ASYMMETRISCHEN SCHLÜSSELMANAGEMENT UND SICHERHEITSRELEVANTE ANLAGE**
METHOD FOR BLOCKCHAIN-BASED, ASYMMETRIC KEY MANAGEMENT AND SECURITY-RELEVANT INSTALLATION
PROCÉDÉ DE GESTION DE CLÉS ASYMÉTRIQUE, BASÉ SUR UNE CHAÎNE DE BLOCS ET INSTALLATION RELATIVE À LA SÉCURITÉ

(30) Priorität: 30.06.2017 DE 102017211201
(43) Veröffentlichungstag der Anmeldung: 11.03.2020
(73) Patentinhaber: Siemens Mobility GmbH, 81739 München (DE)
(72) Erfinder: BRABAND, Jens, 38106 Braunschweig (DE)
(86) Internationale Anmeldenummer: PCT/EP2018/065050
(87) Internationale Veröffentlichungsnummer: WO 2019/001923

(56) Entgegenhaltungen:
- WO-A1-2016/128491
- WO-A1-2016/128569
- WO-A1-2018/073071
- GB-A- 2 540 976
- US-A1- 2016 364 787
- "Chapter 13: Key Management Techniques ED - Menezes A J; Van Oorschot P C; Vanstone S A", HANDBOOK OF APPLIED CRYPTOGRAPHY; [CRC PRESS SERIES ON DISCRETE MATHEMATICES AND ITS APPLICATIONS], CRC PRESS, BOCA RATON, FL, US, PAGE(S) 543 - 590 , 1. Oktober 1996 (1996-10-01), XP001525013, ISBN: 978-0-8493-8523-0 Gefunden im Internet: URL:http://www.cacr.math.uwaterloo.ca/hac/

## Beschreibung

Die Erfindung betrifft ein Verfahren zum asymmetrischen Schlüsselmanagement, insbesondere bei einer sicherheitsrelevanten Anlage, bei dem jedem Teilnehmer ein Schlüsselpaar bestehend aus einem privaten und einem öffentlichen Schlüssel zugeordnet wird, bei dem die öffentlichen Schlüssel oder deren Hash-Werte für die Teilnehmer zugänglich gemacht und von einer zentralen Autorität legitimiert werden und bei dem ein öffentlicher Schlüssel der zentralen Autorität von einer vertrauenswürdigen Stelle veröffentlicht wird.

Asymmetrisches Schlüsselmanagement ist beispielsweise bekannt aus "Chapter 13: Key Management Techniques - Menezes A J; Van Oorschot PC; Vanstone S A", HANDBOOK OF APPLIED CRYPTOGRAPHY; [CRC PRESS SERIES ON DISCRETE MATHEMATICES AND ITS APPLICATIONS], Seiten 543-590; 1. Oktober 1996 (1996-10-01), ISBN: 978-0-8493-8523-0; URL: http://www.cacr.math.uwaterloo.ca/hac; Kapitel 13.2.4.

Die US 2016364787 A1 beschreibt ferner ein Verfahren bei dem Eigentumsverhältnisse an einem Gegenstand transferiert werden.

Ein derartiges asymmetrisches Schlüsselmanagement wird in vielen Bereichen für eine sichere, digitale Kommunikation zwischen Teilnehmern eingesetzt. Auch in sicherheitsrelevanten Anlagen wie beispielsweise einer eisenbahntechnischen Anlage wird ein Schlüsselmanagement eingesetzt, beispielsweise als ETCS-online-Schlüsselmanagement für eine sichere Verbindung zwischen Teilnehmern, wie Fahrzeugen und Streckenzentrale. Allerdings unterscheidet sich das Schlüsselmanagement in einer eisenbahntechnischen Anlage von anderen Anwendungsbereichen beispielsweise dadurch, dass die Teilnehmer stark verteilt und die Schlüssel relativ langlebig sind. Das Standard-Schlüsselmanagement passt daher nicht immer optimal für eine eisenbahntechnische Anlage oder eine andere sicherheitstechnische Anlage.

Es ist daher die Aufgabe der vorliegenden Erfindung ein alternatives asymmetrisches Schlüsselmanagement bereitzustellen.

Die Aufgabe wird erfindungsgemäß für das oben genannte Verfahren dadurch gelöst, dass die öffentlichen Schlüssel der Teilnehmer oder deren Hash-Werte in einem als ein Block-Chain-System aufgebauten Register überprüft oder ausgelesen werden.

Die erfindungsgemäße Lösung hat den Vorteil, dass ein als ein Block-Chain-System aufgebautes öffentliches Register vertrauenswürdig ist und mit derzeit bekannten Mitteln nicht manipulierbar ist. Dadurch kann für das erfindungsgemäße Schlüsselmanagement auf Zertifikate verzichtet werden, so dass der Aufwand für die Erneuerung der Zertifikate und die damit verbundenen Kosten wegfallen.

Bei dem erfindungsgemäßen Verfahren werden zunächst allen Teilnehmern Schlüsselpaare bestehend aus einem privaten und einem öffentlichen Schlüssel zugeordnet. Dies kann beispielsweise bei der Fertigung der Komponente geschehen, wenn das Schlüsselpaar und der öffentliche Schlüssel der zentralen Autorität zugeordnet werden. Da für die Kommunikation in einem asymmetrischen Schlüsselmanagement der Absender einer Nachricht den öffentlichen Schlüssel des Empfängers benötigt, werden alle öffentlichen Schlüssel oder deren Hash-Werte für die Teilnehmer zugänglich gemacht und von der zentralen Autorität legitimiert. Die zentrale Autorität kann beispielsweise eine Schlüsselverteilzentrale sein, die auch als KMC Key Management Center bezeichnet werden kann.

Ein Verfahren zum ETCS-Online-Schlüsselmanagement ist beispielsweise aus der WO 2009/027380 A1 bekannt.

Die bereitgestellten öffentlichen Schlüssel werden bei dem erfindungsgemäßen Verfahren allerdings nicht wie im Stand der Technik mithilfe eines Zertifikats überprüft, sondern mithilfe des als ein Block-Chain-System aufgebauten öffentlichen Registers. Damit die öffentlichen Schlüssel oder deren Hash-Werte in dem Register verfügbar sind, wird in dem Register durch die zentrale Autorität eine Zuordnung des öffentlichen Schlüssels bzw. dessen Hash-Wertes zu einem bestimmten Teilnehmer vorgenommen. Da das Register nach dem Block-Chain-Prinzip aufgebaut ist, kann die durch die zentrale Autorität vorgegebene Zuordnung nicht manipuliert werden. Nur die zentrale Autorität selber kann eine neue Zuordnung im Register hinterlegen, die durch den öffentlichen Schlüssel der zentralen Autorität legitimiert wird.

Unter einer Block-Chain, also einer Block-Kette, wird ein Register oder eine Datenbank verstanden, deren Sicherung gegen nachträgliche Manipulation durch Speicherung des Hash-Wertes des vorangehenden Datensatzes im jeweils nachfolgenden Datensatz gesichert ist. Man kann also von einer kryptografischen Verkettung mithilfe der Block-Chain sprechen. Da die Erzeugung des nachfolgenden Datensatzes öffentlich verteilt und nicht planbar erfolgt, ist die Manipulation so schwerer.

Als das Register wird erfindungsgemäß eine öffentliche Kryptowährung verwendet. Dies hat den Vorteil, dass eine öffentliche Kryptowährung, wie beispielsweise Bitcoin, bereits vorhanden ist und mit geringem Aufwand verwendet werden kann. Öffentliche Kryptowährungen gelten als absolut sicher und sind mit derzeitigen Möglichkeiten nicht manipulierbar, so dass die Sicherheit des Verfahrens sehr hoch ist. Auf dem Block-Chain Prinzip basierte Kryptowährungen sind z. B. unter www.wikipedia.org beschrieben.

Die erfindungsgemäße Lösung kann durch vorteilhafte Ausführungsformen weiterentwickelt werden, die im Folgenden beschrieben sind.

Um weitere Informationen einfach zugänglich zu machen, können die öffentlichen Schlüssel oder deren Hash-Werte in eine für alle Teilnehmer zugängliche Datenbank eingetragen werden. In der Datenbank können beispielsweise die öffentlichen Schlüssel aller Teilnehmer und gegebenenfalls auch weitere Informationen zu den Teilnehmern hinterlegt sein. Beispielsweise kann der öffentliche Schlüssel eines Teilnehmers von einem anderen Teilnehmer aus der Datenbank abgerufen werden und lediglich die Richtigkeit dieser Zuordnung im Register überprüft werden. Alternativ können aber auch sämtliche Informationen in dem Register hinterlegt sein und auf die Datenbank verzichtet werden, wenn das Register dies zulässt. Das Register muss in diesem Fall die zusätzlichen Informationen ablegen können. Bei einer Kryptowährung kann zum Beispiel ein Zusatztext bei einer Überweisung angegeben werden.

Erfindungsgemäß werden jedem Teilnehmer und/oder jedem öffentlichen Schlüssel oder dessen Hash-Wert wenigstens ein im Register hinterlegter Token in Form eines Betrags der Kryptowährung zugeordnet. Dieser Token kann dem Teilnehmer im Register zum Beispiel durch Besitzübertragung zugeordnet werden. Anschließend kann die Zuordnung aber auch widerrufen werden und der Token einem anderen Teilnehmer übereignet werden. Dies organisiert und initiiert die zentrale Autorität. Es ist weiterhin von Vorteil, wenn der Token in der Kryptowährung für einen vorbestimmten atomar kleinen Betrag steht und wenn für dessen Überweisung keine Überweisungsgebühren anfallen. Dies hält die Kosten für das erfindungsgemäße Verfahren klein. Falls dennoch Überweisungsgebühren anfallen, ist das erfindungsgemäße Verfahren trotzdem von Vorteil, weil die Summe der Überweisungsgebühren kleiner ist als die Kosten für jährlich zu bezahlende Zertifikate wie bei den Verfahren im Stand der Technik.

Um zur Überprüfung der öffentlichen Schlüssel im Register schnell den richtigen Token in der Block-Chain zu finden, kann dieser anhand eines Identifikationscodes im Register eindeutig identifiziert werden. Der Identifizierungscode ist zum Beispiel die Historie des Tokens oder der Hash-Wert davon oder eine andere Identifikation.

Es ist weiterhin vorteilhaft, wenn die Zuordnung des Tokens von der zentralen Autorität digital signiert wird. Diese Signatur der zentralen Autorität kann von jedem Teilnehmer mithilfe des öffentlichen Schlüssels der zentralen Autorität überprüft werden. Um eine Zuordnung im Register zu autorisieren, kann die Überweisung des Tokens an einen Teilnehmer und/oder öffentlichen Schlüssel oder dessen Hash-Wert von der zentralen Autorität durch digitale Signatur bestätigt werden.

Es ist weiterhin vorteilhaft, wenn zum Widerrufen eines Schlüssels der Token zu einem anderen Teilnehmer und/oder dem öffentlichen Schlüssel oder des Hash-Wertes zugeordnet und geändert wird. So kann die zentrale Autorität jederzeit eine Zuordnung rückgängig machen. Wenn als Register eine öffentliche Kryptowährung verwendet wird, kann jeder Teilnehmer bei der zentralen Autorität zum Beispiel eine signierte Überweisung des zugeordneten Tokens zurück an die zentrale Autorität hinterlegen. So hat die zentrale Autorität jederzeit die Möglichkeit des Widerrufs. Sie muss nur die Überweisung umsetzen lassen. Eine widerrufene Zuordnung hat zur Folge, dass jeder andere Teilnehmer anhand des Registers erkennt, dass der Schlüssel erloschen ist, weil der Token nicht mehr im Besitz des Teilnehmers ist.

In einer vorteilhaften Ausgestaltung kann zum Erneuern eines Schlüssels von einem der Teilnehmer ein neues Schlüsselpaar erzeugt werden, der dem Teilnehmer zugeordnete Token an eine neue, vom neuen öffentlichen Schlüssel oder dessen Hash-Wert abhängige Adresse übertragen und die Übertragung von der zentralen Autorität bestätigt werden und der neue öffentliche Schlüssel durch die zentrale Autorität im Register hinterlegt werden. Auf diese Weise können Schlüssel sehr einfach erneuert werden. Bei der Ausführung in der Kryptowährung schickt der Teilnehmer eine entsprechende signierte Überweisung an die zentrale Autorität, die anschließend ebenfalls signiert und anschließend die Überweisung umsetzen lässt. Eine Doppel-oder Mehrfachsignatur ist daher vorteilhaft, um eine Bestätigung sowohl vom Teilnehmer als auch von der Autorität sicherzustellen.

Die Erfindung betrifft weiterhin eine sicherheitsrelevante Anlage nach Anspruch 7, insbesondere eine eisenbahntechnische Anlage, mit mehreren Teilnehmern, die zum Kommunizieren miteinander ausgebildet sind und denen jeweils ein Schlüsselpaar bestehend aus einem privaten und einem öffentlichen Schlüssel zugeordnet ist, und mit einer zentralen Autorität, die die öffentlichen Schlüssel oder deren Hash-Werte für die übrigen Teilnehmer zugänglich macht und die einen öffentlichen Schlüssel aufweist, der von einer vertrauenswürdigen Stelle veröffentlicht worden ist. Um ein alternatives asymmetrisches Schlüsselmanagement bereitzustellen, ist es erfindungsgemäß vorgesehen, dass die Teilnehmer und die zentrale Autorität mit einem Zugriff auf ein als ein Block-Chain-System aufgebautes Register ausgebildet sind.

In einer vorteilhaften Ausgestaltung der erfindungsgemäßen sicherheitsrelevanten Anlage kann die Anlage zur Ausführung des erfindungsgemäßen Verfahrens nach einer der zuvor genannten Ausführungsformen ausgebildet sein.

Im Folgenden wird die Erfindung mit Bezug auf die beigefügten Figuren und der darin dargestellten beispielhaften Ausführungsform beschrieben.

### Es zeigen:

- Figur 1: eine beispielhafte Ausführungsform des Verfahrens anhand eines schematischen Flussdiagramms;
- Figur 2: eine schematische Darstellung eines Überweisungsauftrags.

Im Folgenden wird mit Bezug auf die Figuren das erfindungsgemäße Verfahren zum asymmetrischen Schlüsselmanagement anhand der beispielhaft dargestellten Ausführungsform beschrieben.

In der Ausführungsform in den Figuren wird eine Kryptowährung verwendet. Ein anderes Register nach dem Block-Chain-System wäre aber auch möglich.

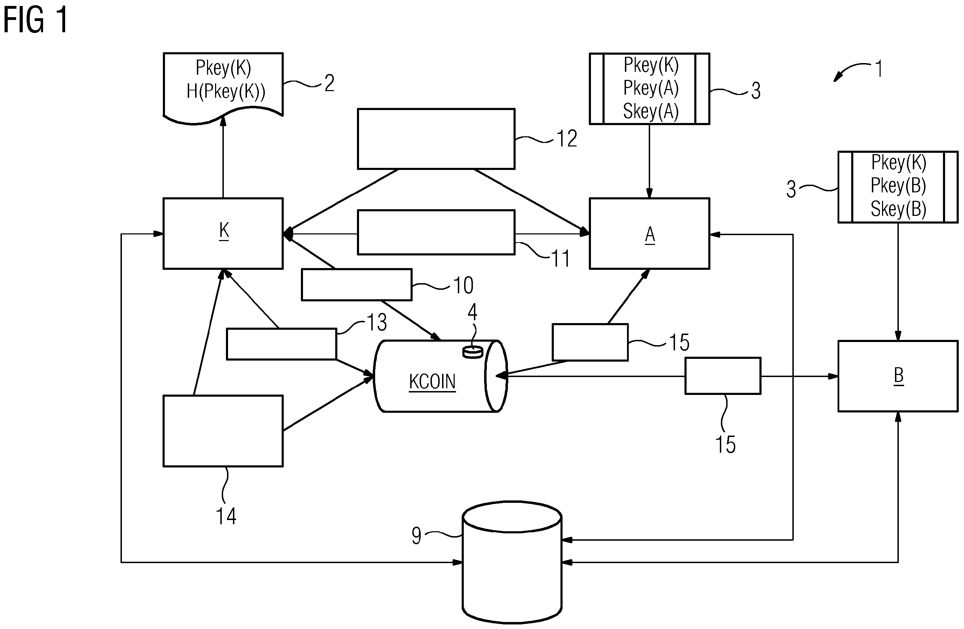

Das in der Figur 1 dargestellte schematische Flussdiagramm zeigt einen Teilnehmer A, einen Teilnehmer B, eine zentrale Autorität K und ein öffentliches Register der Kryptowährung als eine Block-Chain KCOIN.

Sowohl der Teilnehmer A als auch die zentrale Autorität K sind Teil einer eisenbahntechnischen Anlage 1, wobei der Teilnehmer A beispielsweise ein ETCS-Fahrzeug, der Teilnehmer B eine Streckenzentrale und die zentrale Autorität K ein KMC Key Management Center als eine Schlüsselverteilzentrale sein kann. Selbstverständlich weist die eisenbahntechnische Anlage 1 weitere Teilnehmer auf, die hier der Einfachheit halber aber nicht dargestellt sind. Die Teilnehmer A und B und die zentrale Autorität K sind jeweils Teilnehmer der Kryptowährung.

Beim Aufbau des Schlüsselmanagements veröffentlicht die zentrale Autorität K ihren öffentlichen Schlüssel Pkey (K) und den Hash-Wert dieses privaten Schlüssels H (Pkey (K)) mittels einer vertrauenswürdigen Stelle 2. Die vertrauenswürdige Stelle 2 kann beispielsweise ein offizielles Mitteilungsblatt oder eine Zeitung oder ähnliches sein. In jedem Fall ist die vertrauenswürdige Stelle 2 extern zur Kryptowährung und zur Block-Chain KCOIN und stellt einen Vertrauensanker des erfindungsgemäßen Schlüsselmanagements dar.

Das erfindungsgemäße Schlüsselmanagement ist als ein asymmetrisches Schlüsselmanagement aufgebaut, bei dem zur Kommunikation ein Schlüsselpaar bestehend aus einem privaten und aus einem öffentlichen Schlüssel nötig ist. Wie in einem Block 3 dargestellt, hat der Teilnehmer A Zugriff auf sein eigenes Schlüsselpaar bestehend aus seinem öffentlichen Schlüssel Pkey (A) und seinem privaten Schlüssel Skey (A) und dem öffentlichen Schlüssel PKey (K) von der zentralen Autorität K. Das gleiche gilt für den Teilnehmer B.

Die Block-Chain KCOIN ist in der beispielhaften Ausführungsform in Figur 1 Teil einer Kryptowährung, wie beispielsweise Bitcoin. Die Block-Chain KCOIN könnte auch ein anderes öffentliches Register nach dem Block-Chain-System sein, aber im Folgenden wird bei der Beschreibung des erfindungsgemäßen Verfahrens von der Verwendeung einer Kryptowährung ausgegangen. Bei einer Kryptowährung werden alle Transaktionen in Form von Überweisungen unbestreitbar in die Block-Chain eingetragen. Dadurch kann jeder Teilnehmer jede Transaktion jederzeit nachvollziehen. Dabei werden in der Block-Chain KCOIN die Eigentumsverhältnisse an einer Münze, also einem Betrag oder einem Token der Kryptowährung fortgeschrieben.

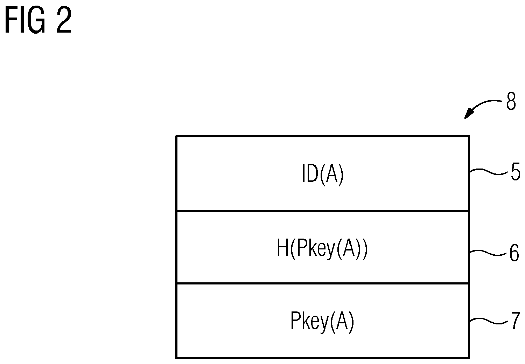

Figur 2 zeigt eine beispielhafte, im Block-Chain hinterlegte Überweisung 8 über einen festgelegten Betrag, der im Folgenden als Token 4 bezeichnet ist. Die Überweisung 8 weist einen Identifikationscode 5, den Empfänger 6 und einen Zusatztext 7 auf. Figur 2 zeigt die beispielhafte Überweisung 8 innerhalb der Kryptowährung. Der Identifikationscode 5 des Token 4 ist in Figur 2 beispielsweise als ID (A) dargestellt. Als Empfänger 6 des Tokens 4 ist in der Überweisung 8 in Figur 2 der Hash-Wert H (Pkey (A)) von dem öffentlichen Schlüssel von A hinterlegt. Als Zusatztext 7 ist beispielsweise der öffentliche Schlüssel von Teilnehmer A angegeben. Die Überweisung 8 ist von der zentralen Autorität K mit ihrem privaten Schlüssel signiert. Der Identifikationscode 5 identifiziert den Token 4 und hilft auch die Überweisung 8 zu finden. Optional kann auf ihn auch verzichtet werden. Trotzdem muss der Token 4 immer eindeutig identifizierbar sein.

Wenn im erfindungsgemäßen Verfahren in Figur 1 der weitere Teilnehmer B mit dem Teilnehmer A kommunizieren will, benötigt dieser den öffentlichen Schlüssel Pkey (A) von dem Teilnehmer A. Der öffentliche Schlüssel Pkey (A) kann in der Block-Chain KCOIN überprüft bzw. daraus ausgelesen werden. Hierfür hat die zentrale Autorität K einen Token 4 mit dem eindeutigen Identifizierungscode ID (A) an den Teilnehmer A bzw. an den Hash-Wert von dem öffentlichen Schlüssel von Teilnehmer A, also H (Pkey (A)) überwiesen. Die Überweisung 8 wurde in der Block-Chain eingetragen. In dem der Überweisung 8 beigefügten Zusatztext 7 können weitere Informationen zu dem Teilnehmer A hinterlegt sein oder auch direkt der öffentliche Schlüssel von Teilnehmer A.

Zur Verifikation des öffentlichen Schlüssels von Teilnehmer A kann ein anderer Teilnehmer B in der Block-Chain KCOIN nach dem Token 4 des Teilnehmers A suchen und den in der Überweisung 8 hinterlegten öffentlichen Schlüssel überprüfen. Die Überprüfung beziehungsweise Abfrage eines Teilnehmers A, B in der Block-Chain KCOIN ist in Schritt 15 dargestellt.

Zusätzlich kann die eisenbahntechnische Anlage 1 optional eine Datenbank 9 aufweisen, in die die zentrale Autorität K die öffentlichen Schlüssel der Teilnehmer einträgt. Wenn ein Teilnehmer A, B nun einen öffentlichen Schlüssel eines anderen Teilnehmers benötigt, kann er ihn in der Datenbank 9 nachschlagen. In der Block-Chain KCOIN kann der in der Datenbank 9 hinterlegte öffentliche Schlüssel verifiziert werden. Dazu sucht der Teilnehmer nach der Überweisung 8, in der dem Teilnehmer A der Token 4 zugeordnet ist. Unter dem Identifikationscode 5 ID (A) ermittelt er den Empfänger 6 und findet dabei den Hash-Wert des öffentlichen Schlüssels von A. Daraufhin akzeptiert er nur öffentliche Schlüssel, die diesen Hash-Wert H (Pkey (A)) haben. In der Datenbank 9 kann auf Kryptografie verzichtet werden, die sonst üblich ist, da die Block-Chain KCOIN durch das Block-Chain-System nicht manipulierbar ist.

Im Block 10 in Figur 1 ist der Überweisungsauftrag für den Token 4 an den Hash-Wert H (Pkey (A)) des öffentlichen Schlüssels von Teilnehmer A durch die zentrale Autorität K dargestellt.

Im Folgenden ist beschrieben wie Schlüssel mit dem erfindungsgemäßen Verfahren widerrufen werden können.

Für den Widerruf eines Schlüssels muss jeder Teilnehmer A, B im Vorfeld einen digital signierten Überweisungsauftrag für den jeweils zugeordneten Token 4 mit dem Identifikationscode ID (A) zurück an die zentrale Autorität K bei dieser hinterlegen. Diese Überweisung kann jederzeit von der zentralen Autorität K eingereicht und in KCOIN registriert werden. Nach dem Einreichen kann jeder Teilnehmer erkennen, dass der Schlüssel erloschen ist denn der Token ID (A) ist nicht mehr im Besitz von Teilnehmer A.

Schritt 14 stellt die Ausführung eines Widerrufs eines Schlüssels dar, bei dem die zentrale Autorität K den in Schritt 11 hinterlegten Überweisungsauftrag KCOIN buchen lässt.

Im Folgenden wird beschrieben wie mit dem erfindungsgemäßen Verfahren Schlüssel von Teilnehmern erneuert werden können.

Für die Erneuerung eines Schlüssels erzeugt ein Teilnehmer A ein neues Schlüsselpaar, das aus einem neuen privaten Schlüssel Skey (A') und einem neuen öffentlichen Schlüssel Pkey (A') besteht. Daraus leitet der Teilnehmer A den neuen Hash-Wert H (Pkey (A')) ab. Der Teilnehmer A sendet anschließend einen Überweisungsauftrag über den ihm zugeordneten Token 4 mit dem Identifikationscode ID (A) an den neuen Hash-Wert H (Pkey (A')), der aber nur akzeptiert wird, wenn dieser auch von der zentralen Autorität K digital signiert wird. Anschließend wird die Überweisung in der Kryptowährung gebucht und in der Block-Chain KCOIN hinterlegt und der öffentliche Schlüssel von Teilnehmer A in der Datenbank 9 erneuert. Ferner muss ein neuer Überweisungsauftrag zum Schlüsselwiderruf bei der zentralen Autorität K hinterlegt werden.

Schritt 11 zeigt die Hinterlegung des signierten Überweisungsauftrags des Tokens 4 mit dem Identifikationscode ID (A) zurück an die zentrale Autorität K. Schritt 12 stellt den ersten Schritt zum Erneuern von Schlüsseln dar, bei dem der Teilnehmer A einen Überweisungsauftrag über den zugeordneten Token ID (A) an den neuen Hash-Wert des neuen öffentlichen Schlüssel H (Pkey (A')) an die zentrale Autorität K schickt. Der zweite Schritt des Erneuerns von Schlüsseln ist in Schritt 13 dargestellt, in dem die zentrale Autorität K den Überweisungsauftrag aus Schritt 12 nun auch und in der Block-Chain KCOIN in einem neuen Block buchen lässt.

Die Schritte 10 bis 14 sind natürlich auch für Teilnehmer B anwendbar, obwohl in Figur 1 nicht dargestellt.

Bei den erfindungsgemäßen Verfahren ist es vorteilhaft, wenn die verwendeten Token oder Münzen der Kryptowährung eine atomar kleine Größe haben und dadurch an sich keinen Wert darstellen und nur für die sichere Hinterlegung von Daten dienen. Es ist weiter vorteilhaft wenn bei der verwendeten Kryptowährung für diese atomare Beträge keine Überweisungsgebühren entstehen. Jeder Token ist in der Kryptowährung eindeutig identifizierbar, beispielsweise über die eigene Historie oder einen Hashwert davon.

Falls doch Überweisungsgebühren fällig werden, kann die zentrale Autorität hierfür über zusätzliche anonyme Beträge verfügen. Ferner kann die Funktion der zentrale Autorität K auch auf mehreren zentralen Autoritäten (nicht dargestellt) aufgeteilt werden. In diesem Fall müssen Widerrufsberechtigungen an alle zentrale Autoritäten gegeben werden und für das Erneuern von Schlüsseln müssen zwei von (n + 1) Signaturen verwendet werden.

Weiterhin kann auch eine Hierarchie in das erfindungsgemäße Verfahren eingeführt werden, beispielsweise könnte eine Urautorität mehrere nationale Autoritäten autorisieren.

Auf die zusätzliche Datenbank 9 kann verzichtet werden, wenn alle notwendigen Informationen in der Kryptowährung untergebracht werden können. In diesem Fall ist die eindeutige Identifikation durch den Identifikationscode ID (A) des Tokens vorteilhaft.

Alternativ kann auch auf die eindeutige Identifikation ID (A) der Token verzichtet werden. Allerdings ist in diesem Fall eine effektive Suche in der Block-Chain KCOIN schwierig und ein Teilnehmer muss immer den aktuellen Hash-Wert H (Pkey (A)) kennen. Wenn sich dieser aber durch Schlüsselupdates geändert hat, muss eventuell länger im Register nach der aktuellen Adresse gesucht werden.

Das erfindungsgemäße Verfahren ist vorteilhaft, weil gegenüber den bekannten Schlüsselmanagements auf Zertifikate verzichtet werden kann, weil diese durch die Block-Chain Mechanismen ersetzt sind. Der Schutz durch das Block-Chain-System des Registers und der Kryptowährung erfolgt bis auf mögliche Transaktionskosten und geringfügige Kosten für die Token kostenlos. Die Kosten für die Token sind im Regelfall im Centbereich pro Teilnehmer. Die Kosten für Zertifikate entfallen völlig.

## Patentansprüche

1. Verfahren zum asymmetrischen Schlüsselmanagement bei einer sicherheitsrelevanten Anlage (1),
bei dem jedem Teilnehmer (A, B) ein Schlüsselpaar bestehend aus einem privaten (Skey) und einem öffentlichen Schlüssel (Pkey)zugeordnet wird,
bei dem die öffentlichen Schlüssel oder deren Hash-Werte für die Teilnehmer zugänglich gemacht und von einer zentralen Autorität (K) legitimiert werden und
bei dem ein öffentlicher Schlüssel (Pkey(k)) der zentralen Autorität (K) von einer vertrauenswürdigen Stelle (2) veröffentlicht wird,
**dadurch gekennzeichnet, dass** die öffentlichen Schlüssel der Teilnehmer (A, B) oder deren Hash-Werte in einem als ein Block-Chain System aufgebauten Register (KCOIN) überprüft oder ausgelesen werden, wobei als das Register (KCOIN) eine öffentliche Kryptowährung verwendet wird und jedem Teilnehmer und/oder jedem öffentlichen Schlüssel oder dessen Hash-Wert wenigstens ein im Register hinterlegter Token (4) in Form eines Betrags der Kryptowährung zugeordnet wird.

2. Verfahren nach Anspruch 1,
**dadurch gekennzeichnet, dass** die öffentlichen Schlüssel und/oder deren Hash-Werte der Teilnehmer in eine für alle Teilnehmer zugängliche Datenbank (9) eingetragen werden.

3. Verfahren nach Anspruch 1 oder 2,
**dadurch gekennzeichnet, dass** die Zuordnung des Tokens (4) anhand eines Identifikationscodes im Register (KCOIN) eindeutig identifiziert wird.

4. Verfahren nach einem der oben genannten Ansprüche,
**dadurch gekennzeichnet, dass** die Zuordnung des Tokens (4) von der zentralen Autorität (K) digital signiert wird.

5. Verfahren nach einem der oben genannten Ansprüche,
**dadurch gekennzeichnet, dass** zum Widerrufen eines Schlüssels der Token zu einem anderen Teilnehmer und/oder öffentlichen Schlüssel oder dessen Hash-Wert zugeordnet wird.

6. Verfahren nach einem der oben genannten Ansprüche,
**dadurch gekennzeichnet, dass** zum Erneuern eines Schlüssels von einem der Teilnehmer ein neues Schlüsselpaar erzeugt wird,
der dem Teilnehmer zugeordnete Token an eine neue, vom neuen öffentlichen Schlüssel oder dessen Hash-Wert abhängige Adresse übertragen und die Übertragung von der zentralen Autorität bestätigt wird, und
der neue öffentliche Schlüssel durch die zentrale Autorität im Register hinterlegt wird.

7. Sicherheitsrelevante Anlage (1), insbesondere eine eisenbahntechnische Anlage, mit mehreren Teilnehmern (A, B), die zum Kommunizieren miteinander ausgebildet sind und denen jeweils ein Schlüsselpaar bestehend aus einem privaten und einem öffentlichen Schlüssel zugeordnet ist, und mit einer zentralen Autorität (K), die die öffentlichen Schlüssel oder deren Hash-Werte für die Teilnehmer zugänglich macht und die einen öffentlichen Schlüssel aufweist, der von einer vertrauenswürdigen Stelle (2) veröffentlicht worden ist,
**dadurch gekennzeichnet, dass** die Teilnehmer (A, B) und die zentrale Autorität (K) mit einem Zugriff auf ein als ein Block-Chain System aufgebautes Register (KCOIN) ausgebildet sind und als das Register (KCOIN) eine öffentliche Kryptowährung verwendet ist und jedem Teilnehmer und/oder jedem öffentlichen Schlüssel oder dessen Hash-Wert wenigstens ein im Register hinterlegter Token (4) in Form eines Betrags der Kryptowährung zugeordnet ist.

8. Sicherheitsrelevante Anlage (1) nach Anspruch 7,
**dadurch gekennzeichnet, dass** die Anlage zur Ausführung des Verfahrens nach einem der oben genannten Ansprüche 1 bis 6 ausgebildet ist.

## Claims

1. Method for asymmetric key management in a security-relevant installation (1),
in which one key pair consisting of a private (Skey) and a public key (Pkey) is assigned to each subscriber (A, B),
in which the public key or its hash values are made accessible to the subscribers and are authorised by a central authority (K) and
in which a public key (Pkey(k)) of the central authority (K) is published by a trustworthy organisation (2),
**characterised in that**
the public keys of the subscribers (A, B) or their hash values are checked or read out in a register (KCOIN) designed as a blockchain system, wherein a public cryptocurrency is used as the register (KCOIN) and at least one token (4) stored in the register is assigned to each subscriber and/or each public key or its hash value in the form of a sum of the cryptocurrency.

2. Method according to claim 1,
**characterised in that**
the public keys of the subscribers and/or their hash values are entered into a database (9) which is accessible to all subscribers.

3. Method according to claim 1 or 2,
**characterised in that**
the assignment of the token (4) is uniquely identified on the basis of an identification code in the register (KCOIN).

4. Method according to one of the afore-cited claims, **characterised in that**
the assignment of the token (4) is signed digitally by the central authority (K).

5. Method according to one of the afore-cited claims, **characterised in that**
in order to revoke a key, the token is assigned to another subscriber and/or public key or its hash value.

6. Method according to one of the afore-cited claims, **characterised in that**
in order to renew a key of one of the subscribers, a new key pair is produced,
the token assigned to the subscriber is transmitted to a new address which is dependent on the new public key or its hash value and the transmission is confirmed by the central authority, and
the new public key is stored in the register by the central authority.

7. Security-relevant installation (1), in particular a railway installation, having a number of subscribers (A, B), which are embodied to communicate with one another and to which in each case a key pair consisting of a private and a public key is assigned, and having a central authority (K), which makes the public keys or their hash values accessible to the subscribers, and which has a public key, which has been published by a trustworthy organisation (2),
**characterised in that**
the subscribers (A, B) and the central authority (K) are embodied with an access to a register (KCOIN) designed as a blockchain system and a public cryptocurrency is used as the register (KCOIN) and at least one token (4) stored in the register is assigned to each subscriber and/or each public key or its hash value in the form of a sum of the cryptocurrency.

8. Security-relevant installation (1) according to claim 7, **characterised in that**
the installation is embodied to carry out the method according to one of the afore-cited claims 1 to 6.

## Revendications

1. Procédé de gestion dissymétrique de clés dans une installation (1) relevant de la sécurité,
dans lequel on affecte à chaque participant (A, B) une paire de clés constituée d'une clé privée (Skey) et d'une clé publique (Pkey),
dans lequel on rend accessible aux participants la clé publique ou ses valeurs de Hash et on les légitime par une autorité (K) centrale et
dans lequel on publie une clé (Pkey(k)) publique de l'autorité (K) centrale par un poste (2) digne de confiance,
**caractérisé en ce que**
on contrôle ou on lit la clé publique des participants (A, B) ou ses valeurs de Hash dans un registre (KCOIN) constitué sous la forme d'un système block-chain, dans lequel on utilise comme registre (KCOIN) une cryptomonnaie publique et on affecte à chaque participant et/ou à chaque clé publique ou sa valeur de Hash au moins un jeton (4) mis dans le registre, sous la forme d'un montant de la cryptomonnaie.

2. Procédé suivant la revendication 1,
**caractérisé en ce que**
on enregistre la clé publique et/ou ses valeurs de Hash des participants dans une base (9) de données accessible à tous les participants.

3. Procédé suivant la revendication 1 ou 2,
**caractérisé en ce que**
on identifie de manière univoque dans le registre (KCOIN) l'affectation du jeton (4) à l'aide d'un code d'identification.

4. Procédé suivant l'une des revendications précédentes, **caractérisé en ce que**
l'affectation du jeton (4) est signée numériquement par l'autorité (K) centrale.

5. Procédé suivant l'une des revendications précédentes, **caractérisé en ce que**
pour rappeler une clé, on affecte le jeton à un autre participant et/ou à une autre clé publique ou à sa valeur de Hash.

6. Procédé suivant l'une des revendications précédentes, **caractérisé en ce que**
pour renouveler une clé, on produit par l'un des participants une nouvelle paire de clés,
on transmet le jeton affecté au participant à une nouvelle adresse, qui dépend de la nouvelle clé publique ou de sa valeur de Hash et on confirme la transmission par l'autorité centrale et
on met la nouvelle clé publique dans le registre par l'autorité centrale.

7. Installation (1) relevant de la sécurité, notamment installation de la technique des chemins de fer, comprenant plusieurs participants (A, B), qui sont constitués pour communiquer entre eux et auquel est affectée respectivement une paire de clés constituée d'une clé privée et d'une clé publique, et comprenant une autorité (K) centrale, qui rend accessible aux participants la clé publique ou ses valeurs de Hash et qui a une clé publique, qui a été publiée par un poste (2) digne de confiance,
**caractérisée en ce que**
les participants (A, B) et l'autorité (K) centrale sont constitués en ayant un accès à un registre (KCOIN) constitué sous la forme d'un block-chain et il est utilisé comme registre (KCOIN) une cryptomonnaie publique et à chaque participant et/ou à chaque clé publique ou à sa valeur de Hash est affecté un jeton (4), sous la forme d'un montant de cryptomonnaie, mis dans le registre.

8. Installation (1) relevant de la sécurité suivant la revendication 7,
**caractérisée en ce que**
l'installation est constituée pour effectuer le procédé suivant l'une des revendications 1 à 6 précédentes.
